Europäisches Patentamt

European Patent Office

Office européen des brevets

(19)

(11) Veröffentlichungsnummer: **0 114 634**
**A2**

(12) # EUROPÄISCHE PATENTANMELDUNG

(21) Anmeldenummer: 84100410.4

(22) Anmeldetag: 17.01.84

(51) Int. Cl.³: **F 24 J 3/02**

(30) Priorität: 21.01.83 DE 3301858

(43) Veröffentlichungstag der Anmeldung:
01.08.84 Patentblatt 84/31

(84) Benannte Vertragsstaaten:
AT BE CH DE FR GB IT LI LU NL SE

(71) Anmelder: E. Cacarda GmbH
Ohmstrasse 3
D-8602 Strullendorf(DE)

(72) Erfinder: Cacarda, Jaroslav
Am Weinberg 15
D-8602 Strullendorf(DE)

(74) Vertreter: LOUIS, PÖHLAU, LOHRENTZ & SEGETH
Kesslerplatz 1
D-8500 Nürnberg(DE)

(54) **Sonnenkollektorplatine und Verfahren zu ihrer Herstellung.**

(57) Es wird ein Verfahren zur Herstellung einer Sonnenkollektorplatine angegeben, wobei eine vorzugsweise aus Kupfer bestehende Rohrschlange (2) und als Absorptionsfläche dienende Tragplatte (1) durch einen Lötvorgang miteinander innig verbunden werden. Die Rohrschlange (2) weist gerade Rohrstrecken (2'') und diese verbindende Bogen (2') auf, wobei die Rohrstrecken (2'') von den Bogen (2') aus vorzugsweise divergierend verlaufen. Auf die Tragplatte (1) wird ein Lötmittel entsprechend dem Verlauf der Rohrschlange aufgebracht, nach Auflegen der Rohrschlange (2) wird in die von den geraden Rohrstrecken (2'') und Bogen (2') umschlossenen Räume ein Füllmaterial (4) eingebracht, das aus das Lötmittel abweisendem Werkstoff besteht. Anschließend wird das aus Tragplatte (1), Lötmittel (3), Rohrschlange (2), Füllmaterial (4) und möglicherweise einer auf der der Tragplatte (1) abgewandten Seite angeordneten Wärmedämmschicht (5) bestehende Zwischenprodukt zwischen zwei Druckplatten (6,6') eingesetzt, die miteinander verspannt werden. Durch wenigstens auf der Seite der Tragplatte (1) einwirkende Hitze wird das Lötmittel (3) zum Schmelzen gebracht, wobei die Rohrschlange (2) durch den von den Druckplatten (6,6') erzeugten Druck in das Lötmittelbett eingepreßt wird.

FIG.1

EP 0 114 634 A2

Croydon Printing Company Ltd.

0114634

- 1 -

Sonnenkollektorplatine
und Verfahren zu ihrer Herstellung

Die Erfindung bezieht sich auf ein Verfahren zur Herstellung einer Sonnenkollektorplatine mit einer als Absorptionsfläche dienenden Tragplatte aus wärmeleitfähigem Material und mit einer auf die Tragplatte in inniger Berührung mit dieser aufgesetzten durchlaufenden mäanderförmigen Rohrschlange, wobei die der Tragplatte zugekehrte Rohrwand der Rohrschlange mit einem Lötmittel in Berührung gebracht wird und in die von der mäanderförmigen Rohrschlange umschlossenen Räume ein Füllmaterial eingebracht wird, auf die der Tragplatte abgewandten Seite der Rohrschlange eine Deckschicht aufgelegt, das aus Tragplatte, Rohrschlange, Lötmittel, Füllmaterial und Deckschicht gebildete Zwischenprodukt zwischen zwei ebenflächigen, das Zwischenprodukt vollkommen abdeckenden Druckplatten eingesetzt wird, die Druckplatten gegeneinander verspannt werden und auf der Außenseite wenigstens der an der Tragplatte anliegenden Druckplatte das Lötmittel für eine Verbindung zwischen Rohrschlange und Tragplatte zum Schmelzen bringende Hitze entwickelt wird, und sie bezieht

0114634

- 2 -

sich auf eine nach diesem Verfahren hergestellte
Sonnenkollektorplatine.

Platinen für Sonnenkollektoren bestehen häufig aus
einer ebenen Tragplatte aus wärmeleitfähigem Material, deren eine Fläche die Sonnenstrahlung aufnimmt,
während an der gegenüberliegenden Fläche eine Rohrschlange in verschiedenartiger Ausbildung angebracht
ist, die von einem durch die Sonnenstrahlung zu
erwärmenden Wärmeträger durchflossen wird. Zwischen Tragplatte und Rohrschlange soll einerseits
eine möglichst innige Verbindung bestehen, um eine
gute Wärmeübertragung zu gewährleisten, andererseits soll der Herstellungsvorgang für solche Platinen möglichst kostengünstig gestaltet werden.
Die Verwendung von aus Rohren runden Querschnitts
gebildeten Rohrschlangen macht zwar deren Formgebung mit geraden Rohrstrecken und diese einstückig
verbindenden Bogen einfach, jedoch ist die Berührungsfläche zwischen rundem Rohr und Tragplatte
nur klein, weshalb eine große Menge an einem Rohrschlange und Tragplatte verbindenden Mittel, z.B.
Lötmittel, benötigt wird, um eine größere Berührungs- oder Wärmeübertragungsfläche zu schaffen.
Die Herstellung der Verbindung von Rohr zu Tragplatte ist insofern nicht nur zeit-, sondern auch
materialaufwendig. Darüber hinaus ist nicht sichergestellt, daß die zwischen Rohr und Tragplatte
vorhandenen Fugen gleichmäßig und sauber mit dem

- 3 -

Verbindungsmittel ausgefüllt werden, sowie daß bei dem Verbinden die Ebenheit der Tragplatte auf ganzer Ausdehnung gewährleistet bleibt, und letzten Endes ergibt sich noch immer eine geringe Wärmeübergangsfläche.

Aus der DE-AS 16 27 628 ist ein Verfahren der eingangs genannten Art zur Herstellung eines Strahlungsheizelementes bekannt, bei dem in die von der mäanderförmigen Rohrschlange umschlossenen Räume ein Füllmaterial eingebracht wird, dessen Wandstärke größer ist als der Durchmesser der einen kreisringförmigen Querschnitt aufweisenden Rohrschlange, und bei dem in der der Rohrschlange entsprechenden Aussparung des Füllmaterials über der Rohrschlange eine Deckschicht in Form eines an die Rohrschlange formmäßig angepaßten elastischen Kissens angeordnet wird, das gegen die Rohrleitung einen Druck ausübt, wenn sich die Rohrleitung in der Aussparung befindet und das Zwischenprodukt aus Tragplatte, Rohrschlange, Lötmittel, Füllmaterial und elastischem Kissen zwischen Druckplatten eingespannt wird. Bei diesem bekannten Verfahren muß sowohl das Füllmaterial eine an die Form der Rohrschlange angepaßte Ausnehmung aufweisen, als auch das elastische Kissen, und muß das elastische Kissen genau und arbeitsaufwendig über der Rohrschlange in die Ausnehmung des Füllmaterials eingelegt werden. Außerdem ist die Auswahl eines geeigneten, der Löttemperatur widerstehenden elastischen Materials

- 4 -

für das Kissen problematisch.

Aus der DE-OS 28 06 487 ist ein Sonnenkollektor bekannt, der aus zwei Blechlamellen aufgebaut ist, zwischen denen in entsprechenden Ausprägungen mindestens eine den Wärmeträger führende mäanderförmige Leitung angeordnet ist. Die beiden Blechlamellen müssen bei diesem bekannten Sonnenkollektor einem Tiefzieh- oder anderem Prägevorgang unterzogen und zur Ausbildung der mäanderförmigen Leitungen genau gegeneinander ausgerichtet und genau aufeinander angeordnet werden.

Ein Plattenwärmetauscher mit D-förmigen Rohren ist aus der GB-PS 8 26 625 bekannt. Dort liegen die D-förmigen Rohre mit ihrem abgeplatteten Bereich auf einer Tragplatte auf und wird die Oberseite der D-förmigen Rohre und die Oberseite der Tragplatte mit einer mit Rillen versehenen Platte bedeckt. Dort sind diese Rillen den Rohren abmessungsmäßig angepaßt. Die mit Rillen versehene Platte ist nur relativ aufwendig herzustellen, was sich auf den Gesamtpreis eines derartigen Wärmetauschers auswirkt.

Der vorliegenden Erfindung liegt deshalb die Aufgabe zugrunde, ein Verfahren zur Herstellung einer Sonnenkollektorplatine aus einer Tragplatte und einer mit dieser innig verbundenen Rohrschlange

- 5 -

anzugeben, das kostengünstig durchzuführen ist, einwandfreie Verbindungen zwischen Rohrschlange und Tragplatte gewährleistet, die Ausbildung einer relativ großen Verbindungsfläche zwischen Rohren sowie Tragplatte ermöglicht, d.h.einen guten Wärmeübergang sicherstellt, und bei dem einwandfrei ebene Platinen mit einem hohen thermischen Wirkungsgrad erhalten werden.

Diese Aufgabe wird erfindungsgemäß dadurch gelöst, daß das von der mäanderförmigen Rohrschlange umschlossene Füllmaterial mit einer Wandstärke eingebracht wird, die um so viel kleiner ist als die Höhe des Rohrscheitels der auf der Tragplatte aufgesetzten Rohrschlange über der Grundfläche der Tragplatte vor dem Schmelzen der Lötmittelschicht, daß nach dem Schmelzen der Lötmittelschicht das Füllmaterial auf der einen Seite an der Tragplatte und auf der anderen Seite an der Deckschicht anliegt.

Erfindungsgemäß ergibt sich eine kostengünstige Herstellung insofern, als die Tragplatte und die Rohrschlange nach einfachen vorbereitenden Arbeitsgängen in einem einzigen Vorgang verbunden werden, der gut zu kontrollieren ist, einwandfreie Verbindungen ergibt und die Ebenheit der gesamten Platine gewährleistet.

Vorzugsweise werden die Rohre der Rohrschlange

- 6 -

vor ihrem Auflegen auf die Tragplatte an der
dieser zugewandten Seite mit einer die Verbindung fördernden Schicht versehen; wenn
also Zinn oder eine Zinnlegierung als Löt-
oder Verbindungsmittel dient, erfolgt eine
vorherige Verzinnung an der der Tragplatte zugewandten Seite der Rohre. In diesem Zusammenhang ist darauf hinzuweisen, daß ein "Lötmittel"
hier nur als Beispiel erwähnt wird; andere Verbindungsmittel, die einen innigen Verbund von
Rohrschlange und Tragplatte bei gutem Wärmeübergang und in einem einzigen Arbeitsgang ermöglichen, werden insofern von dem allgemeinen
Ausdruck "Lötmittel" mitumfaßt . Vorzugsweise
wird das Lötmittel in Bandform auf die Tragplatte entsprechend dem vorgegebenen Verlauf
der Rohrschlange aufgelegt.

Die geraden Rohrstrecken der Rohrschlange können
zueinander parallel angeordnet sein, jedoch erhält die Rohrschlange vorzugsweise eine Gestalt,
wobei die geraden Rohrstrecken bei entsprechender
Anordnung der Platine einen ständig ansteigenden
bzw. abfallenden Verlauf haben, was den Durchfluß
des Wärmeträgers in der einen oder anderen Richtung
begünstigen kann; ferner bietet die Anordnung die
Möglichkeit, das in die von geraden Rohrstrecken
und Bogen umgrenzten Räume eingebrachte Füllmaterial, das die Lage der Rohrstrecken zueinander
bestimmt, nach Fertigstellung der Platine in einfacher Weise entfernen zu können.

0 1 1 4 6 3 4

- 7 -

Das in die von den geraden Rohrstrecken und Bogen umschlossenen Räume eingebrachte Füllmaterial bestimmt nicht nur die Lage der Rohrstrecken zueinander, es verhindert auch einen zu starken Andruck auf die Oberseite der Rohre und damit eine mögliche Verformung, wenn die Verbindung zwischen Rohren und Tragplatte hergestellt wird. Da diese Verbindung durch Hitzeeinwirkung erfolgt und diese Hitze auf das Lötmittel sowie die zu verbindenden Fläche einwirken soll, wird auf die der Tragplatte abgewandten Seite von Rohren und Füllmaterial eine Wärmedämmschicht aufgelegt, die hier einen Abfluß der Hitze verhindert, durch ihre Materialeigenschaften jedoch auch eine Beschädigung oder Verformung der Rohrwand bei Andruck unterbinden kann.

Das aus Tragplatte, Rohrschlange, Lötmittel, Füllmaterial und möglicherweise der Wärmedämmschicht gebildete Zwischenprodukt wird dann zwischen zwei ebenflächige , dieses Zwischenprodukt vollkommen abdeckende Druckplatten eingesetzt,die gegeneinander verspannt werden, und dann wird wenigstens auf der Seite der an der Tragplatte anliegenden Druckplatte Hitze entwickelt, die das Lötmittel zum Schmelzen bringt und die innige Verbindung von Rohrschlange sowie Tragplatte bewirkt. Nach Entfernen der Druckplatten,Wärmedämmschicht und des Füllmaterials liegt eine vollkommen ebene Platine mit einwandfreien, sauberen Verbindungen zwischen Rohrschlange und Tragplatte vor.

- 8 -

Vorzugsweise  haben die Rohre eine Abplattung
auf der der Tragplatte zugewandten Seite, um
hier eine  großflächige Verbindung zu ermöglichen,
und hierfür bietet ein Rohr mit im wesentlichen
D-förmigem Querschnitt, wobei die abgeplattete,
ebene Fläche über je eine Rundung in eine die
abgeplattete Fläche überdeckende korbbogenförmige
Rundung übergeht, besondere Vorteile nicht nur
in bezug auf guten Wärmeübergang durch großflächige Anlage an der Tragplatte, sondern auch in
bezug auf Verform- oder Biegefähigkeit zur Herstellung der fortlaufenden Rohrschlangen.

Als Material für die Rohrschlangen und Tragplatten wird vorzugsweise Kupfer oder eine kupferhaltige Legierung mit guten Wärmeübertragungseigenschaften gewählt, zumal solches Material auch
bei relativ niedrigen Temperaturen mit Zinn als
Lötmittel gut zu verbinden ist.

Um eine sauber abgegrenzte Lötnaht  zwischen Rohr
und Tragplatte zu erhalten, aber auch um die Ebenheit der Platine  zu gewährleisten, soll das Füllmaterial vorzugsweise einen rechteckigen Querschnitt haben. Es kann jedoch auch ein trapezförmiger Querschnitt in Betracht kommen, wobei dann
die kürzere Grundlinie des Trapezes der Tragplatte zugekehrt wird, beide Grundlinien aber zueinander parallel sind. Je nach der Breite der Platine kann als Füllmaterial eine dem gewünschen Verlauf der geraden Rohrstrecken und dem diese ver-

- 9 -

bindenden Bogen      angepaßte einteilige Platte verwendet werden, bei größerer Breite der
Platine können anstelle der einteiligen Platte
mehrere einander angepaßte Plattenabschnitte zur
Anwendung kommen, was das Einsetzen und Entfernen des Füllmaterials erleichtern kann.

Von besonderer Bedeutung ist die Höhe des Füllmaterials. Zwischen dessen der Tragplatte abgewandten Oberfläche und der angrenzenden Fläche
der wärmedämmenden Schicht oder der oberen
Druckplatte muß im Ausgangszustand der zu bildenden Platine ein Spalt bleiben, der vorzugsweise etwa der halben Stärke der Lötmittelschicht
in deren kaltem oder unbeeinflußtem Zustand entspricht. Damit liegt die Wärmedämmschicht oder
die Druckplatte, falls auf eine Wärmedämmschicht
verzichtet wird, am der Tragplatte abgewandten
Rohrscheitel an, und bei Druckanwendung sowie
Hitzeeinwirkung wird dann das Rohr um das durch
den Spalt bestimmte Maß nach unten und in das geschmolzene Lötmittel gedrückt.

Das Füllmaterial soll ein das Lötmittel abweisendes Material sein, damit keine unerwünschte Verbindung gebildet wird, die das Entfernen des Füllmaterials erschwert und Beschädigungen der Lötnaht hervorrufen kann. Vorzugsweise werden deshalb als Lötmittel Zinn bzw. eine Zinnlegierung,
als Füllmaterial Aluminium verwendet.

- 10 -

Von besonderem Vorteil ist es, das Lötmaterial in Bandform auf die Tragplatten aufzulegen, da hierdurch eine einheitliche Stärke des Lötmittels gewährleistet und eine einfache, kostengünstige Arbeitsweise geboten werden können. Für das Lötmittel wird ein Schmelzpunkt von etwa 280°-305°C gewählt, wobei die die Verbindung zwischen Rohrschlange und Tragplatte bewirkende Temperatur dann bei etwa 330°C liegen soll.

Diese Hitze kann durch auf die Außenfläche der an der Tragplatte anliegenden Druckplatte gerichtete Wärmestrahler, vorzugsweise Gasstrahler, entwickelt werden. Jedoch kann auch das oben näher bezeichnete Zwischenprodukt mit den dieses zusammenspannenden Druckplatten in einem Ofen erhitzt werden.

Die Druckplatten werden vorzugsweise aus einem metallischen Werkstoff gefertigt, wobei wenigstens die der Tragplatte und den Rohrschlangen sowie dem Füllmaterial zugewandten Flächen vollkommen plan sein sollen. Hierbei ist wenigstens die der Tragplatte benachbarte Druckplatte, vor allem bei einseitiger Hitzeeinwirkung, aus einem Wärme gut leitenden Werkstoff gefertigt, um eine schnelle und hohe Wärmeeinwirkung auf das Lötmittel sowie die zu verbindenden Flächen zu erreichen.

Das Verspannen der Druckplatten gegeneinander soll so erfolgen, daß ihre Ebenheit beibehalten wird, was einmal von ihrer Stärke und zum anderen vom

- 11 -

Ort der Spannwirkung abhängt.

Der Erfindungsgegenstand wird anhand der Zeichnung erläutert. Es zeigen:

Fig. 1 eine Draufsicht auf eine Sonnenkollektorplatine mit Tragplatte, Rohrschlange und Füllmaterial;

Fig. 2 einen lotrechten Schnitt durch einen Teil einer Sonnenkollektorplatine während ihrer Herstellung.

Die Sonnenkollektorplatine besteht im Fertigzustand aus der Tragplatte 1 sowie der Rohrschlange 2, die beide aus gut wärmeleitfähigem Material, z.B. Kupfer oder Kupferlegierung gebildet sind.

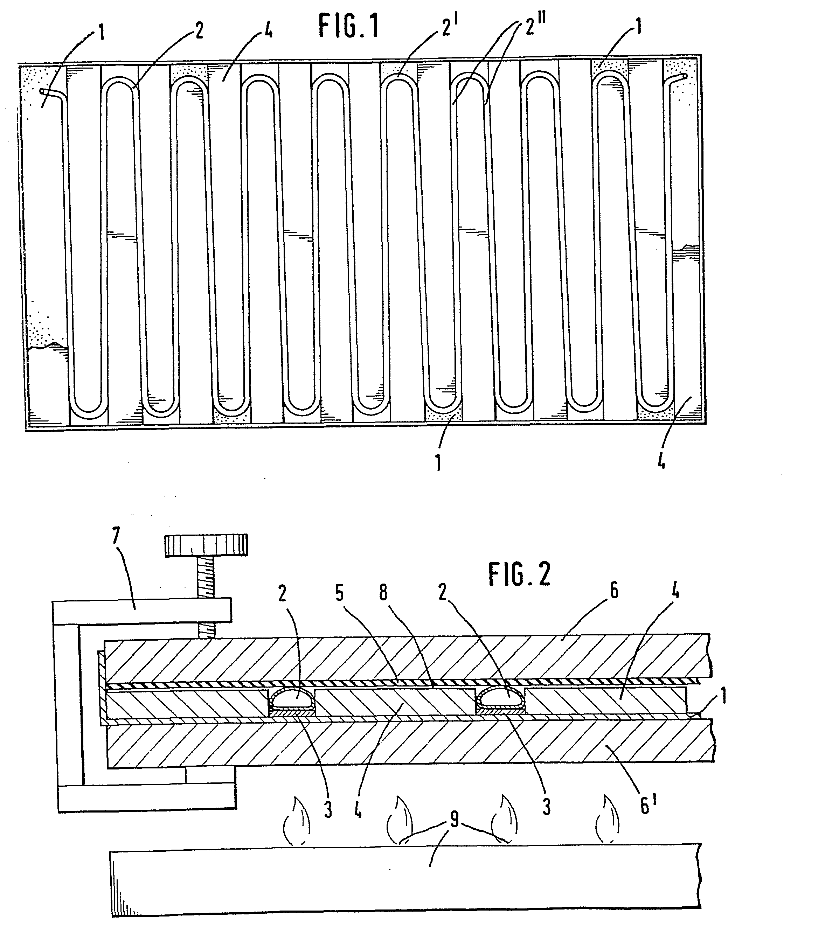

Die Rohrschlange 2 wird vorzugsweise aus einem einseitig abgeplatteten Material, wie Fig. 2 zeigt, gebildet, d.h. aus einem im Querschnitt im wesentlichen D-förmigen Material, wobei die abgeplattete Fläche über den größten Teil ihrer Erstreckung eben ist sowie über je eine Rundung in eine korbbogenförmig verlaufende Fläche übergeht. Die abgeplattete Fläche ist der Tragplatte 1 benachbart angeordnet. Die Tragplatte kann in vorteilhafter Weise auf ihrer der Rohrschlange 2 abgewandten Fläche, also auf der die Sonnenstrahlen absorbierenden Fläche, geschwärzt sein.

- 12 -

Zur Herstellung der Platine wird die Rohrschlange 2 bevorzugterweise so gestaltet, daß zwei gerade, durch einen Rohrbogen 2' oder ein anders geformtes Teil verbundene Rohrstrecken 2'' zueinander divergierend verlaufen. Damit erhalten die Rohrstrecken 2'' einen fortlaufend geneigten Verlauf, wenn die Platine auf einer ihrer Schmalseiten steht, was den Durchfluß des Wärmeträgers begünstigen kann.

Vor Aufbringen der Rohrschlange 2 auf die Tragplatte 1 wird auf diese entsprechend dem Verlauf der Rohrschlange ein Lötmittel 3 vorzugsweise in Bandform aufgetragen, da damit eine ziemlich genaue Bestimmung der Schichtstärke möglich ist. Es ist von Vorteil, die Verbindungsfläche der Rohre vor Auflegen auf die Tragplatte bzw. das Lötmittel zu verzinnen.

Nach Auflegen der Rohrschlange auf die Tragplatte in der vorgesehenen Weise wird in die von den geraden Rohrschenkeln 2'' und den Bogen 2' begrenzten Räume ein Füllmaterial 4 eingesetzt. Im gezeigten Beispiel ist dieses Material als einstückige Platte ausgebildet, je nach Breite der Platine können auch zusammenpassende Plattenabschnitte verwendet werden.

Das Füllmaterial 4 soll ein solches sein, das sich mit dem Lötmittel nicht verbindet, also beispiels-

- 13 -

weise Aluminium, wenn als Lötmittel 3 eine Zinnlegierung verwendet wird. Der Schmelzpunkt des
Lötmittels wird vorzugsweise zu 280°-305°C gewählt, während die Verbindung zwischen Tragplatte und Rohrschlange bei etwa 330°C bewirkt
wird.

Bei der Herstellung der Platine wird auf die der
Tragplatte 1  abgewandten Flächen von Füllmaterial 4 und Rohrschlangen 2 eine Schicht 5
aus wärmedämmendem Material,z. B. Asbest, aufgelegt, jedoch kann diese Schicht auch an der
oberen Druckplatte, auf die noch eingegangen wird,
haftend befestigt sein. Eine einzelne Schicht 5
ist allein schon im  Hinblick auf eine notwendig werdende Erneuerung  allerdings vorteilhafter. Auch soll diese Schicht nicht unverformbar sein, weshalb Asbest oder ein Material mit
gleichen Eigenschaften wie Asbest vorzugsweise
Anwendung findet.

Das aus der Tragplatte 1, den Rohrschlangen 2,
dem Lötmittel 3, dem Füllmaterial 4 und der Wärmedämmschicht 5 gebildete Zwischenprodukt wird
zwischen zwei Druckplatten 6, 6' aus metallischem
Werkstoff gelegt, von  denen wenigstens die innenliegenden Flächen, d.h. die der Tragplatte und
den dieser abgewandten Flächen von Füllmaterial und
Rohrschlangen benachbarten Flächen, möglichst plan
ausgebildet sind. Die Druckplatten 6, 6' bedecken
das Zwischenprodukt auf dessen gesamter Ausdehnung. Vorzugsweise wird wenigstens die der Tragplatte 1 benachbarte Druckplatte 6'

- 14 -

aus einem Wärme gut leitendem Material gefertigt.Die Druckplatten werden dann mit dem zwischen ihnen befindlichen Zwischenprodukt zusammengespannt, wozu, wie gezeigt ist, Schraubzwingen 7 dienen können. Um einen gleichmäßigen, auf ganzer Ausdehnung der Platine wirkenden Druck zu erzeugen, ist die Stärke der Druckplatten in Abhängigkeit von den Angriffsstellen der Schraubzwingen 7 entsprechend zu wählen. Bei größeren Flächen können Spannrahmen mit mehreren, sich beispielsweise rechtwinklig kreuzenden, die Flächen der Druckplatten überspannenden Profilleisten Verwendung finden.

In dem in Fig. 2 gezeigten Zustand, wobei zwischen dem Füllmaterial 4 und der Wärmedämmschicht 5 Spalte 8 von etwa der halben Stärke der Lötmittelschicht 3 vorhanden sind, wird dann wenigstens auf der Außenseite der der Tragplatte 1 benachbarten Druckplatte 6' Hitze erzeugt, wozu beispielsweise Gasstrahler 9 dienen können, oder die in Fig. 2 gezeigte Anordnung wird in einen Ofen, z.B. einen Elektroofen, eingebracht, so daß das Lötmittel 3 zum Schmelzen kommt und Tragplatte sowie Rohrschlange so erwärmt werden, daß über das Lötmittel die innige Verbindung hergestellt wird.

Die Schraubzwingen 7 oder sonstige Spannmittel

0114634

- 15 -

haben im allgemeinen eine solche Eigenspannung, die ausreicht, um die Spalte 8 zu schließen, d.h. die Rohrschlange unter Druck in das Lötmittelbett einzupressen. Bei einem exakt rechteckigen Querschnitt des Füllmaterials 4, weshalb hier vorzugsweise Platten zur Anwendung kommen, kann das Lötmittel 3 nicht seitlich wegfließen, es kann allenfalls etwas aufsteigen, um den zwischen dem im Ausgangszustand bandartigen Lötmittel, der Rohrwand und der angrenzenden Fläche des Füllmaterials vorhandenen Zwickel auszufüllen. Bei einem trapezförmigen Querschnitt des Füllmaterials kann man eine größere Lötfuge erhalten, was manchmal erwünscht sein kann, allerdings mehr Lötmittel erfordert.

Nach Abstellen der Beheizung bzw. Herausnehmen aus dem Ofen und nach Verstreichen einer gewissen Zeitspanne, um die Lötstelle fest werden zu lassen, werden die Druckplatten 6,6' sowie die Wärmedämmschicht 5 entfernt. Anschließend wird das Füllmaterial 4 aus den Räumen zwischen den geraden Rohrstrecken 2'' genommen, was durch die Verbreiterung in Richtung der dem Bogen 2' gegenüberliegenden Seite begünstigt wird.

Es liegt dann eine Sonnenkollektorplatine mit einer vollkommen planen, als Absorptionsfläche dienenden Tragplatte und mit einer auf diese in inniger Berührung mit der Tragplatte aufgesetzten Rohrschlange aus geraden Rohrstrecken und diese

- 16 -

verbindenden Bogen oder Zwischenstücken vor,
wobei zwei einander benachbarte, durch einen Bogen verbundene Rohrstrecken zueinander divergierend verlaufen. Diese Rohrschlange, für die vorzugsweise ein Rohrmaterial mit D-förmigem Querschnitt Verwendung findet, ist auf ihrer gesamten abgeplatteten Fläche über das Lötmittel innig
mit der Tragplatte verbunden, wobei aufgrund der
Anordnung und Form des Füllmaterials eine einwandfreie, sauber begrenzte Lötnaht ohne seitliche
Ausläufer gebildet wurde, die auch noch die durch
die Rundung des Rohrs gegebenen Zwickel ausfüllt,
was bedeutet, daß eine große Wärmeübergangsfläche
gewährleistet ist.

0114634

- 1 -

<u>Patentansprüche:</u>

1. Verfahren zur Herstellung einer Sonnenkollektorplatine mit einer als Absorptionsfläche dienenden Tragplatte aus wärmeleitfähigem Material und mit einer auf die Tragplatte in inniger Berührung mit dieser aufgesetzten durchlaufenden mäanderförmigen Rohrschlange, wobei die der Tragplatte zugekehrte Rohrwand der Rohrschlange mit einem Lötmittel in Berührung gebracht wird und in die von der mäanderförmigen Rohrschlange umschlossenen Räume ein Füllmaterial eingebracht wird, auf die der Tragplatte abgewandte Seite der Rohrschlange eine Deckschicht aufgelegt, das aus Tragplatte, Rohrschlange, Lötmittel, Füllmaterial und Deckschicht gebildete Zwischenprodukt zwischen zwei ebenflächigen, das Zwischenprodukt vollkommen abdeckenden Druckplatten eingesetzt wird, die Druckplatten gegeneinander verspannt werden und auf der Außenseite wenigstens der an der Tragplatte anliegenden Druckplatte das Lötmittel für eine Verbindung zwischen Rohrschlange und Tragplatte zum Schmelzen bringende Hitze entwickelt wird,

- 2 -

dadurch gekennzeichnet,
daß das von der mäanderförmigen Rohrschlange
(2) umschlossene Füllmaterial (4) mit einer
Wandstärke eingebracht wird, die um so viel
kleiner ist als die Höhe des Rohrscheitels
der auf der Tragplatte aufgesetzten Rohrschlange (2) über der Grundfläche der Tragplatte (1)
vor dem Schmelzen der Lötmittelschicht (3),
daß nach dem Schmelzen der Lötmittelschicht (3)
das Füllmaterial (4) auf der einen  Seite an
der Tragplatte (1) und auf der anderen Seite an
der Deckschicht  (5) anliegt.

2. Verfahren nach Anspruch 1,
dadurch gekennzeichnet,
daß das Füllmaterial (4) nur bis zu einer unter
dem der Tragplatte (1) abgewandten, oberen Rohrscheitel liegenden Höhe eingebracht wird.

3. Verfahren nach Anspruch 1 oder 2,
dadurch gekennzeichnet,
daß der durch den oberen Rohrscheitel und die
diesem benachbarte Fläche des Füllmaterials (4)
bestimmte Spalt (8) etwa der halben Stärke  der
Lötmittelschicht (3) vor einer Wärmeeinwirkung
auf diese entspricht.

4. Verfahren nach einem der Ansprüche 1 bis 3,
dadurch gekennzeichnet,
daß  das Füllmaterial (4) aus einer Platte oder
aus mehreren einander angepaßten Platten gebildet
ist.

0114634

- 3 -

5. Verfahren nach Anspruch 1,
   dadurch gekennzeichnet,
   daß als Deckschicht auf die der Tragplatte (1)
   abgewandte Seite eine die Rohrschlange (2)
   und das Füllmaterial (4) ganzflächig bedeckende,
   wärmedämmende Deckschicht (5) aufgelegt wird.

6. Verfahren nach einem der Ansprüche 1 bis 5,
   dadurch gekennzeichnet,
   daß die Rohre der Rohrschlange (2) vor dem Auflegen auf die Tragplatte (1) an der der Tragplatte (1) zugewandten Seite mit einer die
   Lötverbindung fördernden Schicht versehen werden.

7. Verfahren nach einem der Ansprüche 1 bis 6,
   dadurch gekennzeichnet,
   daß die Rohre der Rohrschlange (2) an der der
   Tragplatte (1) zugewandten Seite mit einer Abplattung versehen werden.

8. Verfahren nach einem der Ansprüche 1 bis 7,
   dadurch gekennzeichnet,
   daß die Rohrschlange (2) und die Tragplatte (1)
   aus Kupfer gefertigt werden.

9. Verfahren nach Anspruch 1,
   dadurch gekennzeichnet,
   daß das Füllmaterial einen trapezförmigen Querschnitt aufweist, wobei die kleinere Grundseite
   der Tragplatte zugewandt ist.

- 4 -

10. Verfahren nach einem der Ansprüche 1 bis 9,
dadurch gekennzeichnet,
daß das Lötmittel eine Zinnlegierung und
das Füllmaterial Aluminium ist.

11. Verfahren nach einem der Ansprüche 1 bis 10,
dadurch gekennzeichnet,
daß das Lötmittel einen im Bereich von
280°-320°C liegenden Schmelzpunkt hat.

12. Verfahren nach Anspruch 1 und 11,
dadurch gekennzeichnet,
daß die Verbindung zwischen der Rohrschlange
(2) und der Tragplatte (1) bei etwa 330°C bewirkt wird.

13. Verfahren nach Anspruch 1,
dadurch gekennzeichnet,
daß die Hitze durch auf die Oberfläche der
der Tragplatte (1) benachbarten Druckplatte
(6') gerichtete Wärmestrahler (9) entwickelt
wird.

14. Verfahren nach Anspruch 1,
dadurch gekennzeichnet
daß das Zwischenprodukt mit den dieses zusammenspannenden Druckplatten in einem Ofen
erhitzt wird.

- 5 -

15. Verfahren nach einem der Ansprüche 1 bis
14,
dadurch gekennzeichnet,
daß die Druckplatten (6,6') aus einem metallischen Werkstoff bestehen und wenigstens die der Tragplatte (1) unmittelbar
gegenüberliegende Druckplatte (6') aus
gut wärmeleitfähigem Werkstoff gebildet ist.

16. Sonnenkollektorplatine mit einer als Absorptionsfläche dienenden Tragplatte aus
wärmeleitfähigem Material und mit einer
auf die Tragplatte in inniger Berührung
mit dieser aufgesetzten Rohrschlange aus
geraden Rohrstrecken und diese verbindenden Bogen für einen Wärmeträger,
dadurch gekennzeichnet,
daß die Rohrschlange (2) aus einem Rohr mit
im Wesen nach D-förmigem Querschnitt gebildet ist, dessen abgeplattete Fläche über
den größten Teil ihrer Erstreckung plan
sowie auf ganzer Fläche über ein Lötmittel
(3) mit der Tragplatte (1) verbunden ist.

17. Sonnenkollektorplatine nach Anspruch 16,
dadurch gekennzeichnet,
daß zwei einander benachbarte, durch einen
Rohrbogen (2') einteilig verbundene Rohrstrecken (2'') zueinander divergierend verlaufen.

0114634

- 6 -

18. Sonnenkollektorplatine nach Anspruch 16
oder 17,
dadurch gekennzeichnet,
daß die abgeplattete Fläche über eine
Rundung mit kleinem Radius in eine korbbogenförmige Rundung übergeht.

19. Sonnenkollektorplatine nach Anspruch 16,
dadurch gekennzeichnet,
daß die Absorptionsfläche geschwärzt ist.

FIG.1

FIG.2